# FASCICULE DE BREVET EUROPEEN

(11) **EP 1 271 890 B1**
(45) Date de publication et mention de la délivrance du brevet: **02.04.2008**
(21) Numéro de dépôt: 02290144.1
(22) Date de dépôt: 21.01.2002
(51) Int. Cl.: H04L 29/06, H04L 12/56

(54) **Passerelle de contrôle d'accès à un réseau actif**
Zugangskontrollegateway zu einem Aktiven Netzwerk
Access control gateway to an active network

(30) Priorité: 22.01.2001 FR 0100800
(43) Date de publication de la demande: 02.01.2003
(73) Titulaire: Alcatel Lucent, 75008 Paris (FR)
(72) Inventeur: Galand, Damien, 92370 Chaville (FR); Marce, Olivier, 91300 Massy (FR); El Mghazli, Yacine, 94250 Gentilly (FR)
(74) Mandataire: Chaffraix, Sylvain

(56) Documents cités:
- BOYLE P: "WEB SITE TRAFFIC COPS" PC MAGAZINE, A PC COMMUNICATION CORP. NEW YORK, US, 18 février 1997 (1997-02-18), page COMPLETE XP002910307 ISSN: 0888-8507
- RAZ D ET AL: "Active networks for efficient distributed network management" IEEE COMMUNICATIONS MAGAZINE, MARCH 2000, IEEE, USA, vol. 38, no. 3, pages 138-143, XP002182235 ISSN: 0163-6804
- AWEYA J: "On the design of IP routers Part 1: Router architectures" JOURNAL OF SYSTEMS ARCHITECTURE, ELSEVIER SCIENCE PUBLISHERS BV., AMSTERDAM, NL, vol. 46, no. 6, avril 2000 (2000-04), pages 483-511, XP004190486 ISSN: 1383-7621
- MAXEMCHUK N.F.: 'Active Routing' IEEE JOURNAL ON SELECTED AREAS IN COMMUNICATIONS vol. 19, no. 3, Mars 2001, pages 552 - 564, XP001101029
- SIVAKUMAR R. ET AL: 'A scalable architecture for active networks' OPEN ARCHITECTURES AND NETWORK PROGRAMMING, 2000. PROCEEDINGS 26 Mars 2000, OPENARCH 2000, pages 108 - 117, XP010376208

## Description

La présente invention est relative aux réseaux de télécommunication dont les noeuds sont capables de traiter de façon spécifique, les messages d'information qu'ils reçoivent, et plus précisément à l'accès à ces réseaux de télécommunication.

L'invention s'applique particulièrement aux réseaux actifs, c'est-à-dire aux réseaux dans lesquels certains des systèmes de routage (ou noeuds), sont capables de traiter d'une façon spécifique, les messages véhiculés par le réseau ou tout du moins certains de ces messages. Autrement dit, cela signifie que ces noeuds doivent être capables de dérouler un algorithme autre que ceux qu'ils connaissaient lors de leur conception, et que chaque message reçu peut nécessiter des ressources de traitement.

Au sein d'un réseau actif, tous les noeuds ne sont pas obligatoirement pourvus de cette capacité de traitement : on distingue donc des noeuds actifs et des noeuds non actifs (communément appelés passifs). De même, les messages ne nécessitent pas tous un traitement spécifique : on distingue donc des messages actifs et des messages non actifs (ou passifs).

Le document RAZ ET AL : « Active Networks for efficient distributed network management » IEEE COMMUNICATION MAGAZINE, MARCH 2000, IEEE, USA, vol. 38, n°3, page 138-143**, XP002182235 ISSN : 0163-6804**, décrit un noeud actif comportant un routeur classique associé à un moteur actif. Le routeur remplit notamment une fonction de filtrage consistant à dévier des paquets actifs vers le moteur actif de ce routeur. Les paquets passifs sont dirigés directement vers un port de sortie du routeur. Le moteur actif est un environnement qui permet d'exécuter du code contenu dans les messages actifs. Le moteur actif comprend un gestionnaire qui crée des sessions, coordonne les transferts de données vers ou en provenance des sessions, et qui nettoie à la fin d'une cession. Quand une session est en cours, le gestionnaire surveille l'utilisation des ressources par cette session. Chaque connexion qu'une session veut ouvrir est enregistrée par ce gestionnaire pour surveiller l'utilisation des ressources par les sessions, afin d'éviter un usage abusif des ressources. Toute connexion non autorisée est relâchée.

De façon connue en soi, les réseaux informatiques ou de télécommunication peuvent être divisés en plusieurs domaines ou sous-réseaux. Il est également connu de contrôler l'accès à un domaine au moyen d'une passerelle de contrôle d'accès. Dans le cadre d'une application aux réseaux basés sur le protocole Internet, cette passerelle de contrôle d'accès est appelée selon la terminologie de langue anglaise, « edge router », et les systèmes de routage ou noeud sont appelés des routeurs.

Toutefois, la fonction de ces passerelles de contrôle d'accès se limite principalement à la vérification des droits d'utilisation de la bande passante correspondant aux données transmises par un émetteur.

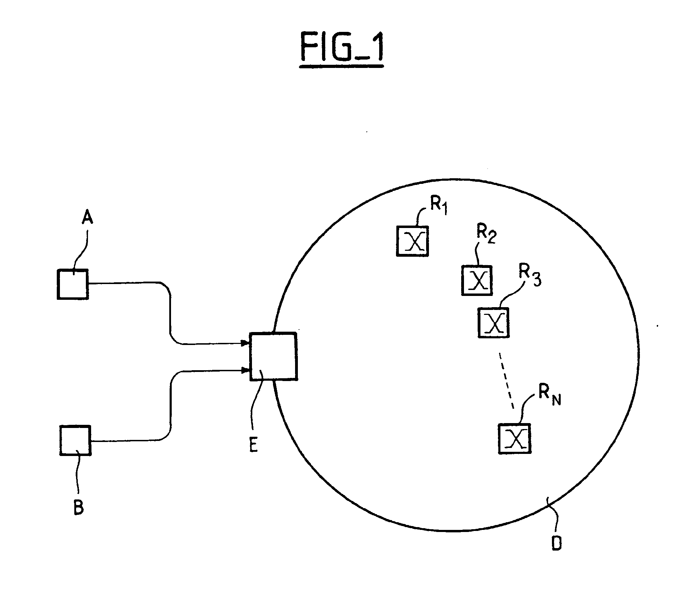

La figure 1 annexée illustre l'environnement d'une telle passerelle de contrôle d'accès E. Cette passerelle de contrôle d'accès E permet d'administrer l'accès à un domaine D composé de N noeuds R₁, R₂, R₃... R_{N}. Les références A et B représentent deux émetteurs de messages, par exemple des stations hôtes ou des noeuds appartenant à un autre domaine.

L'émetteur A n'est pas autorisé à envoyer des messages vers le domaine D. La passerelle de contrôle d'accès E bloque alors les messages provenant de l'émetteur A.

Inversement, l'émetteur B est autorisé à envoyer des messages vers le domaine D. La passerelle de contrôle d'accès peut donc laisser passer les messages provenant de l'émetteur B. Dans une mise en oeuvre plus évoluée de cette passerelle de contrôle d'accès, elle peut ne laisser passer qu'un nombre de messages correspondant, par exemple, à la bande passante pour laquelle l'émetteur B a souscrit.

On voit donc que le fonctionnement d'une telle passerelle de contrôle d'accès ne permet pas d'administrer le traitement engendré par les messages reçus des émetteurs. Si le domaine D comporte des systèmes de routage actifs, rien n'empêche les émetteurs A et B d'émettre des messages nécessitant d'importantes ressources de traitement de la part de ces systèmes de routage actifs.

Aussi, cela peut impliquer une congestion des systèmes de routage actifs et donc un effondrement des performances du réseau.

De même, ce manque de contrôle peut engendrer des failles de sécurité puisqu'un émetteur malveillant pour rendre le réseau inopérant simplement en émettant des messages nécessitant d'importantes ressources de traitement.

Bien évidemment, un autre inconvénient est la possibilité d'émission de codes malveillants, communément appelés virus informatiques, sans que ceux-ci soient contrôlés avant exécution par les systèmes de routage.

L'invention a pour but de pallier ces différents inconvénients, en contrôlant les messages entrant dans un domaine, au niveau de la passerelle de contrôle d'accès.

L'invention a donc pour premier objet, une passerelle de contrôle d'accès à un premier réseau de données comportant des moyens de filtrage des données provenant d'un second réseau de données, ces données étant formatées sous la forme de messages actifs ou de messages passifs, un message actif étant message qui nécessite un traitement spécifique, et un message passif étant un message qui ne nécessite pas de traitement spécifique ;
caractérisée en ce que ces moyens de filtrage sont prévus pour
- détecter dans un message des informations sur le fait que le message nécessite ou non un traitement spécifique, et détecter dans ledit message des informations sur l'environnement d'exécution nécessaire au traitement du message par les systèmes de routage actif dudit premier réseau,
- et, si un message nécessite un traitement spécifique, décider la transmission ou la non transmission de ce message vers le premier réseau en fonction desdites informations sur l'environnement d'exécution nécessaire au traitement du message.

L'invention a aussi pour objet, un procédé de transmission vers un premier réseau de données, de données provenant d'un second réseau d'accès, par une passerelle de contrôle d'accès, ces données étant formatées sous la forme de messages actifs ou de messages passifs, un message actif étant message qui nécessite un traitement spécifique, et un message passif étant un message qui ne nécessite pas de traitement spécifique ;
caractérisé en ce que ledit procédé comporte des étapes de :
- détection, dans un message, d'informations sur le fait que le message nécessite ou non un traitement spécifique, et détection dans ledit message d'informations sur l'environnement d'exécution nécessaire au traitement du message par les systèmes de routage actif dudit premier réseau,
- et, si un message nécessite un traitement spécifique, décision de transmettre ou non ce message vers le premier réseau en fonction desdites informations sur l'environnement d'exécution nécessaire au traitement du message.

L'invention et ses avantages apparaîtront de façon plus claire dans la description d'une mise en oeuvre, qui va suivre, en liaison avec les figures annexées.

La figure 1, déjà commenté, schématise l'environnement d'une passerelle de contrôle d'accès.

La figure 2 illustre une seconde mise en oeuvre de l'invention.

Les données reçues par la passerelle de contrôle d'accès sont classiquement formatées en messages, appelés paquets dans la terminologie Internet. Ces messages ou paquets comportent un entête composé de plusieurs champs et un corps de message.

Les informations relatives aux traitements des données par les systèmes de routage peuvent être insérées dans les champs de l'entête du message, ou bien dans le corps lui-même.

Ces informations peuvent comprendre :
- Des informations sur l'émetteur et le ou les destinataires du message,
- Des informations sur l'environnement d'exécution nécessaire au traitement du message,
- Des informations sur le fait que le message nécessite ou non un traitement spécifique.

Cette liste n'est pas nécessairement exhaustive et peut être enrichie, notamment en fonction du développement de la technologie des réseaux actifs.

Les informations sur l'émetteur et sur le ou les destinataires du message peuvent classiquement être des paramètres IP (*Internet Protocol*) tels des adresses IP, des numéros de ports ou de protocoles, etc.

Les informations sur le fait que le message nécessite ou non un traitement spécifique peut simplement être un drapeau indiquant si le message en question est un message actif ou un message normal.

Enfin, les informations sur l'environnement d'exécution permettent de préciser, par exemple sous la forme d'identificateurs, par quel environnement d'exécution doit être traité le message. Cet environnement d'exécution peut par exemple être le système d'exploitation que doit posséder le système de routage. Il peut aussi identifier une version de ce système d'exploitation, ou même des modules logiciels supplémentaires nécessaires au traitement du message etc.

La façon dont ces différentes informations peuvent être insérées dans les messages est en dehors du cadre de l'invention et à la portée de l'homme du métier. Notamment, elle peut dépendre en partie de spécifications ultérieures provenant de l'IANA (*Internet Assigned Number Authority*) au sujet de laquelle on peut trouver des informations sur le site Internet http://www.iana.org, ou de l'ANANA (*Active Network Assigned Number Authority*).

Selon une mise en oeuvre de l'invention, à la réception d'un message, la passerelle de contrôle d'accès détermine s'il doit être transmis ou non.

Selon une seconde mise en oeuvre, la passerelle de contrôle d'accès n'effectue cette détermination que pour le premier message d'un flux, c'est-à-dire d'un ensemble de messages ayant le même émetteur et le ou les mêmes destinataires, et les mêmes caractéristiques réseau (protocole, port, etc.). La décision (transmission ou non-transmission) sera alors répercutée sur tous les autres messages du flux.

La décision prise par le moyen de filtrage de la passerelle de contrôle d'accès peut être de différentes natures.

Il peut tout d'abord s'agir d'une décision de rejet. Le message (ou le flux) n'est alors pas transmis vers le domaine contrôlé par la passerelle de contrôle d'accès.

Une autre décision peut être de transmettre le message mais en le transformant en message passif. Il peut alors être transmis dans le domaine D contrôlé par la passerelle de contrôle d'accès, mais sans engendrer de traitement et donc sans consommer de ressources de traitement. Eventuellement, si le destinataire du message est en dehors de ce domaine D, le message peut ensuite ressortir du domaine D et redevenir un message actif, cette réactivation du message pouvant être indifféremment effectuée par le dernier noeud du domaine D traversé ou par une passerelle de contrôle d'accès d'un autre domaine (par exemple, celui auquel appartient le destinataire du message)

Classiquement, les messages peuvent être marqués, c'est-à-dire qu'un champ (par exemple dans leur entête) indique s'il s'agit d'un message actif ou d'un message passif. Dans ce cas, la transformation en message non actif, consiste à simplement modifier la valeur de ce champ.

Une autre solution peut consister à conserver ce champ comme indiquant un message actif, mais en indiquant dans un autre champ que le message ne doit pas faire l'objet d'un traitement par les systèmes de routage le véhiculant. Un tel champ peut par exemple être le champ indiquant l'environnement d'exécution qui prendrait alors une valeur spéciale.

Une autre décision, englobant la décision précédente, peut être de transmettre le message en lui allouant une quantité de ressources de traitement limitée. Il peut alors être transmis dans le domaine contrôlé par la passerelle de contrôle d'accès, chaque noeud actif ne traitant le message que dans les limites des ressources qui sont allouées au message en question.

Par ce procédé, un message peut être transmis avec une allocation ressources égale à zéro, ce qui correspond à transmettre un message comme s'il n'était pas actif. L'avantage de cette allocation est que lorsque le message est transmis à un autre domaine composé de noeuds actifs, il peut lui être alloué des ressources de traitement non nulles et être alors traité comme un message actif.

Classiquement, cette allocation des ressources de traitement peut se faire en positionnant la valeur correspondante dans un champ dédié. La modification de l'allocation des ressources de traitement consiste simplement à modifier la valeur de ce champ.

Une autre décision susceptible d'être prise par les moyens de filtrage de la passerelle de contrôle d'accès consiste à accepter le message et à le transmettre dans le domaine contrôlé, sans modification. Dans le cas où la passerelle de contrôle d'accès aurait aussi une fonction de routage, elle peut le transmettre à son système de routage, de même que si elle possède un environnement d'exécution, elle peut lui transmettre le message et déclencher un traitement spécifique.

La décision peut être prise par les moyens de filtrage sur la base des informations insérées dans les messages reçus, précédemment évoquées.

Elle peut aussi se baser sur une base de profils accessible par ces moyens de filtrage. Cette base de profils peut par exemple être contenue dans la passerelle de contrôle d'accès, et met en correspondance des identificateurs de l'émetteur du message et des paramètres d'autorisation.

Cette base de profils peut correspondre à des contrats souscrits par des clients auprès de l'opérateur gérant le domaine contrôlé par la passerelle de contrôle d'accès.

Ainsi, un client identifié par une adresse d'émission (typiquement, une adresse IP) peut n'avoir souscrit que pour la transmission de messages passifs et pas pour la transmission de messages actifs. Dans ce cas, la base de profils peut indiquer, sous la forme de paramètres d'autorisation, ces différents droits d'accès et les moyens de filtrage peuvent accepter ou rejeter les messages provenant de ce client, en fonction de leur statut (actif, passif).

De même, un client peut n'avoir souscrit qu'à certains types d'environnement d'exécution. En ce cas, le champ indiquant l'environnement d'exécution nécessaire au traitement du message doit aussi être testé, et la décision prise en fonction de l'adéquation entre les environnements d'exécution souscrits et l'environnement d'exécution indiqué dans le message.

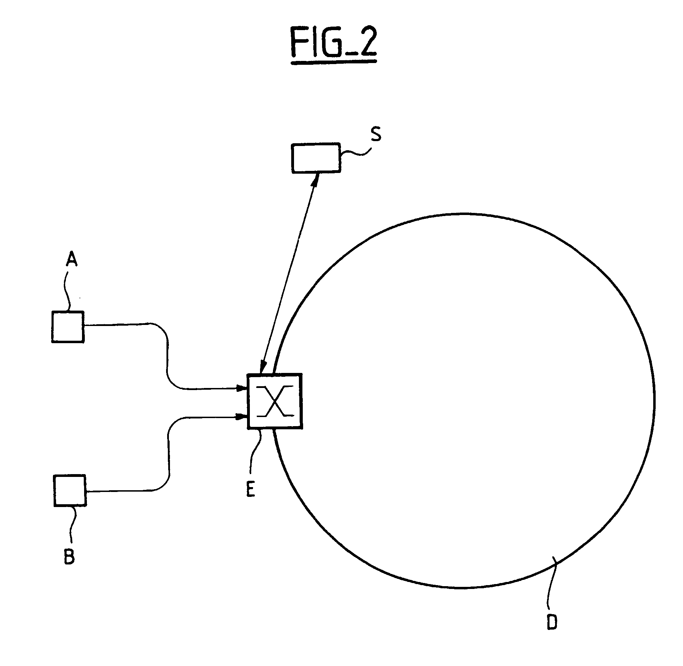

Selon une mise en oeuvre de l'invention illustrée par la figure 2, les moyens de filtrage de données peuvent fonctionner en collaboration avec un serveur de contrôle S.

Ce serveur de contrôle peut, par exemple, être le serveur de codes actifs qui est classiquement utilisé pour fournir du code actif aux noeuds d'un réseau actif.

La collaboration ente la passerelle de contrôle d'accès E et le serveur de contrôle S peut être mise en oeuvre au moyen d'un protocole de communication. Ce protocole peut par exemple est le protocole COPS, tel que défini par le RFC 2748 de l'IETF (*Internet Engineering Task Force).*

La collaboration peut être implémentée selon deux modes :
■ Chaque fois que nécessaire (c'est-à-dire à chaque réception d'un paquet actif, ou du premier paquet d'un flot de paquets actifs), la passerelle de contrôle d'accès E interroge le serveur de contrôle S. C'est alors ce serveur de contrôle S qui décide de la transmission ou non du ou des paquets actifs. Il transmet sa réponse à la passerelle de contrôle d'accès E qui, en fonction de cette réponse, déclenche la transmission des paquets ou non.
■ Le serveur de contrôle S transmet à la passerelle de contrôle d'accès E, un ensemble de règles. Ces règles sont utilisées par la passerelle de contrôle d'accès pour décider de la transmission des paquets actifs reçus.

Dans le cadre d'une mise en oeuvre utilisant le protocole COPS, le premier mode est conforme au mécanisme dit « *Outsourcing »,* et le premier mode au mécanisme appelé « *Provisionning* ».

Selon le premier mode de réalisation, à la réception d'un paquet actif, la passerelle de contrôle d'accès détermine en premier lieu les informations pertinentes pour la fonction de contrôle d'accès, qui sont contenues dans ce paquet actif. Typiquement, ces informations comportent un identificateur du code actif et des données relatives à l'environnement d'exécution nécessaire à ce code actif.

Ces informations sont alors extraites et insérées dans un message protocolaire adressé au serveur de contrôle S. A la lumière de ces informations, le serveur de contrôle S peut alors décider si le paquet actif peut être transmis dans le domaine ou pas, et s'il peut être transmis, si d'autres opérations doivent être mises en oeuvre (par exemple, en le transformant en message passif, ou en lui allouant des ressources de traitement limitées, ainsi qu'il a été expliqué plus haut).

Le serveur de contrôle S transmet alors sa décision à la passerelle de contrôle d'accès E, qui grâce au moyen de filtrage, pour mettre en oeuvre cette décision.

## Revendications

1. Passerelle de contrôle d'accès (E) à un premier réseau de données (D) comportant des moyens de filtrage des données provenant d'un second réseau de données, ces données étant formatées sous la forme de messages actifs ou de messages passifs, un message actif étant message qui nécessite un traitement spécifique, et un message passif étant un message qui ne nécessite pas de traitement spécifique ;
**caractérisée en ce que** ces moyens de filtrage sont prévus pour
- détecter dans un message des informations sur le fait que le message nécessite ou non un traitement spécifique, et détecter dans ledit message des informations sur l'environnement d'exécution nécessaire au traitement du message par les systèmes de routage actif dudit premier réseau,
- et, si un message nécessite un traitement spécifique, décider la transmission ou la non transmission de ce message vers le premier réseau (D) en fonction desdites informations sur l'environnement d'exécution nécessaire au traitement du message.

2. Passerelle de contrôle d'accès selon la revendication 1, dans laquelle lesdits moyens de filtrage sont prévus pour accéder à une base de profils mettant en correspondance des identificateurs de l'émetteur desdites données et des paramètres d'autorisation, afin de décider de ladite transmission.

3. Passerelle de contrôle d'accès selon l'une des revendications 1 ou 2, dans laquelle lesdits moyens de filtrage sont prévus pour transformer des messages actifs en messages passifs.

4. Passerelle de contrôle d'accès selon l'une des revendications 1 ou 2, dans laquelle lesdits moyens de filtrage sont prévus pour allouer aux messages actifs une quantité de ressources de traitement.

5. Passerelle de contrôle d'accès selon la revendication 1, dans lequel lesdits moyens de filtrage peuvent fonctionner en collaboration avec un serveur d'accès (S).

6. Passerelle de contrôle d'accès selon la revendication 5, dans lequel lesdits moyens de filtrage sont prévus pour transmettre une partie desdites données audit serveur d'accès, et pour mettre en oeuvre une décision reçue dudit serveur d'accès.

7. Passerelle de contrôle d'accès selon la revendication 6, dans lequel les communications avec ledit serveur d'accès sont conformes au protocole COPS.

8. Procédé de transmission vers un premier réseau de données (D), de données provenant d'un second réseau d'accès, par une passerelle de contrôle d'accès (E), ces données étant formatées sous la forme de messages actifs ou de messages passifs, un message actif étant message qui nécessite un traitement spécifique, et un message passif étant un message qui ne nécessite pas de traitement spécifique ;
**caractérisé en ce que** ledit procédé comporte des étapes de :
- détection, dans un message, d'informations sur le fait que le message nécessite ou non un traitement spécifique, et détection dans ledit message d'informations sur l'environnement d'exécution nécessaire au traitement du message par les systèmes de routage actif dudit premier réseau,
- et, si un message nécessite un traitement spécifique, décision de transmettre ou non ce message vers le premier réseau (D) en fonction desdites informations sur l'environnement d'exécution nécessaire au traitement du message.

9. Procédé de transmission selon la revendication précédente, dans lequel l'étape de décision est précédée d'une étape de lecture d'une base de profils mettant en correspondance des identificateurs de l'émetteur desdites données et des paramètres d'autorisation, et dans lequel l'étape de décision est réalisée en fonction de cette étape de lecture d'une base de profils.

10. Procédé de transmission selon l'une des revendications 5 ou 6, dans lequel ladite décision de non transmission peut être la transformation d'un message actif en un message passif.

11. Procédé de transmission selon l'une des revendications 5 ou 6, dans laquelle ladite décision de transmission peut être l'allocation aux messages actifs d'une quantité de ressources de traitement.

## Claims

1. An access control gateway (E) for controlling access to a first data network (D), which gateway includes filter means for filtering data coming from a second data network, this data being formatted in the form of active or passive messages, an active message being a message which requires specific processing, and a passive message being a message which does not require specific processing;
the gateway being **characterized in that** said filter means are adapted:
- to detect information in a message about whether or not the message requires specific processing, and to detect information in said message about the environment necessary for the active routing systems of said first network to execute message processing; and
- if a message requites specific processing, to decide whether or not to transmit this message to the first network as a function of said information about the environment necessary for executing message processing.

2. An access control gateway according to claim 1, wherein said filter means are adapted to access a profile database matching identifiers of the sender of said data and authorization parameters in order to decide whether to transmit.

3. An access control gateway according to claim 1 or claim 2, wherein said filter means are adapted to convert active messages into passive messages.

4. An access control gateway according to claim 1 or claim 2, wherein said filter means are adapted to allocate active messages a quantity of processing resources.

5. An access control gateway according to claim 1, wherein said filter means can operate in collaboration with an access server (S).

6. An access control gateway according to claim 5, wherein said filter means are adapted to transmit some of said data to said access server and to implement a decision received from said access server.

7. An access control gateway according to claim 6, wherein communications with said access server conform to the COPS protocol.

8. A method of transmitting to a first network (D), which is a data network, data coming from a second network, which is an access network, via an access control gateway (E);
the method being **characterized in that** it includes the following steps:
- detecting information in a message about whether or not the message requires specific processing, and detecting information in said message about the environment necessary for the active routing systems of said first network to execute message processing; and
- if a message requites specific processing, deciding whether or not to transmit this message to the first network (D) as a function of said information about the environment necessary for executing message processing.

9. A transmission method according to the preceding claim, wherein the decision step is preceded by a step of reading a profile database for matching identifiers of the sender of said data and authorization parameters and the decision step is performed as a function of said step of reading the profile database.

10. A transmission method according to either claim 5 or claim 6, wherein said decision not to transmit can be to convert an active message into a passive message.

11. A transmission method according to either claim 5 or claim 6, wherein said decision to transmit can be to allocate active messages a quantity of processing resources.

## Patentansprüche

1. Zugangskontrollgateway (E) zu einem ersten Datennetzwerk (D), das Filtervorrichtungen für Daten umfasst, die von einem zweiten Datennetzwerk stammen, wobei diese Daten in Form von aktiven Meldungen oder passiven Meldungen formatiert sind, wobei es sich bei einer aktiven Meldung um eine Meldung handelt, die eine spezifische Verarbeitung erfordert, und bei einer passiven Meldung um eine Meldung, die keine spezifische Verarbeitung erfordert;
**dadurch gekennzeichnet, dass** diese Filtervorrichtungen für folgende Funktionen vorgesehen sind:
- Erfassung von Informationen in einer Meldung auf der Grundlage der Tatsache, dass die Meldung eine spezifische Verarbeitung erfordert oder nicht, und Erfassung von Informationen in der genannten Meldung über die Umgebung, die zur Ausführung einer Verarbeitung der Meldung durch die aktiven Routingsysteme des genannten ersten Netzwerks erforderlich ist;
- und, falls die Meldung eine spezifische Verarbeitung erfordert, Entscheidung über die Übertragung bzw. Nicht-Übertragung dieser Meldung an das erste Netzwerk (D) in Abhängigkeit von den genannten Informationen über die erforderliche Umgebung zur Ausführung der Meldungsverarbeitung.

2. Zugangskontrollgateway gemäß Anspruch 1, in dem die genannten Filtervorrichtungen dazu vorgesehen sind, auf eine Profildatenbank zuzugreifen, die eine Zuordnung zwischen den Kennungen des Senders der genannten Daten und Parametern für die Zugangsberechtigung herstellt, um über die genannte Übertragung zu entscheiden.

3. Zugangskontrollgateway gemäß einem der Ansprüche 1 oder 2, in dem die genannten Filtervorrichtungen dazu vorgesehen sind, die aktiven Meldungen in passive Meldungen umzuwandeln.

4. Zugangskontrollgateway gemäß einem der Ansprüche 1 oder 2, in dem die genannten Filtervorrichtungen dazu vorgesehen sind, den aktiven Meldungen eine bestimmte Menge an Verarbeitungsressourcen zuzuordnen.

5. Zugangskontrollgateway gemäß Anspruch 1, in dem die genannten Filtervorrichtungen in Zusammenarbeit mit einem Zugangsserver (S) funktionieren können.

6. Zugangskontrollgateway gemäß Anspruch 5, in dem die genannten Filtervorrichtungen vorgesehen sind, um einen Teil der genannten Daten an den Zugangsserver zu übertragen und eine von dem genannten Zugangsserver empfangene Entscheidung umzusetzen.

7. Zugangskontrollgateway gemäß Anspruch 6, in dem die Kommunikation mit dem genannten Zugangsserver dem Protokoll COPS entspricht.

8. Verfahren zur Übertragung von Daten, die von einem zweiten Zugangsnetzwerk stammen, über ein Zugangskontrollgateway (E) an ein erstes Datennetzwerk (D), wobei diese Daten in Form von aktiven Meldungen oder passiven Meldungen formatiert sind, wobei es sich bei einer aktiven Meldung um eine Meldung handelt, die eine spezielle Verarbeitung erfordert, und bei einer passiven Meldung um eine Meldung, die keine spezifische Verarbeitung erfordert,
**dadurch gekennzeichnet, dass** das genannte Verfahren die folgenden Schritte umfasst:
- Erfassung von Informationen in einer Meldung auf der Grundlage der Tatsache, dass die Meldung eine spezifische Verarbeitung erfordert oder nicht, und Erfassung von Informationen in der genannten Meldung über die Umgebung, die zur Ausführung einer Verarbeitung der Meldung durch die aktiven Routingsysteme des genannten ersten Netzwerks erforderlich ist;
- und, falls die Meldung eine spezifische Verarbeitung erfordert, Entscheidung über die Übertragung bzw. Nicht-Übertragung dieser Meldung an das erste Netzwerk (D) in Abhängigkeit von den genannten Informationen über die erforderliche Umgebung zur Ausführung der Meldungsverarbeitung.

9. Übertragungsverfahren gemäß vorstehendem Anspruch, in dem dem Schritt zur Entscheidung ein Schritt zur Abfrage einer Profildatenbank vorausgeht, in der eine Zuordnung zwischen den Kennungen des Senders der genannten Daten und Zugangsparametern erfolgt und in dem der Schritt zur Entscheidung in Abhängigkeit von diesem Schritt zur Abfrage der Datenbank ausgeführt wird.

10. Übertragungsverfahren gemäß einem der Ansprüche 5 oder 6, in dem die genannte Entscheidung zur Nicht-Übertragung die Umwandlung einer aktiven Meldung in eine passive Meldung beinhalten kann.

11. Übertragungsverfahren gemäß einem der Ansprüche 5 oder 6, in dem die genannte Entscheidung zur Übertragung die Zuordnung einer bestimmten Menge von Übertragungsressourcen für die aktiven Meldungen beinhalten kann.
